(19) Europäisches Patentamt

European Patent Office

Office européen des brevets

(11) **EP 3 902 151 B1**

(12) **EUROPEAN PATENT SPECIFICATION**

(45) Date of publication and mention of the grant of the patent:
**23.08.2023 Bulletin 2023/34**

(21) Application number: **19899995.5**

(22) Date of filing: **18.12.2019**

(51) International Patent Classification (IPC):
**H04B 7/0456** *(2017.01)*      **H04B 7/06** *(2006.01)*

(52) Cooperative Patent Classification (CPC):
**H04B 7/0478; H04B 7/0479; H04B 7/065**

(86) International application number:
**PCT/CN2019/126422**

(87) International publication number:
**WO 2020/125694 (25.06.2020 Gazette 2020/26)**

(54) **CODEBOOK INFORMATION PROCESSING METHOD, TERMINAL, AND COMPUTER-READABLE STORAGE MEDIUM**

VERFAHREN ZUR VERARBEITUNG VON CODEBUCH-INFORMATIONEN, ENDGERÄT UND COMPUTERLESBARES SPEICHERMEDIUM

PROCÉDÉ DE TRAITEMENT D'INFORMATIONS DE RÉPERTOIRE DE CODES, TERMINAL, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 CN 201811549964**

(43) Date of publication of application:
**27.10.2021 Bulletin 2021/43**

(73) Proprietor: **Sanechips Technology Co., Ltd.**
**Shenzhen, Guangdong 518055 (CN)**

(72) Inventor: **BIAN, Qing**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(56) References cited:
**WO-A1-2016/206052        CN-A- 104 144 006**
**CN-A- 104 321 983        US-A1- 2013 195 035**
**US-A1- 2014 016 549        US-A1- 2016 156 401**
**US-A1- 2017 047 978**

• **New Postcom: "PMI feedback for DL CoMP", 3GPP drafT R1-113696, 11 November 2011 (2011-11-11), XP050562370, DOI: 20200226155928A Retrieved from the Internet: URL:http://www.3gpp.org/ftp/tsg_ran/WG1_RL 1/TSGR1_67/Docs/**

EP 3 902 151 B1

## Description

## Technical Field

The present disclosure relates to the field of information processing, and in particular, to a codebook information processing method, a terminal, and a computer-readable storage medium.

## Background

The 5th-Generation Wireless Communication Technology (5G) system adopts a large-scale antenna array and a beam forming technology to improve the system performance. The beam forming technology based on a large-scale antenna array requires that a sender can accurately acquire Channel State Information (CSI), and select, according to the channel state information, an optimal beam for data transmission. The channel state information needs to be fed back to the sender by a receiver User Equipment (UE). The channel state information includes a CSI Reference Signal (CSI-RS) resource indicator, a Rank Indicator (RI), a Precoding Matrix Index (PMI) and a Channel Quality Indicator (CQI). A UE performs channel estimation to acquire a channel coefficient matrix H and a noise coefficient No, selects a CSI-RS resource which is most suitable for the reporting to acquire a CRI (CSI-RS Resource Indicator), selects an RI and a PMI which are most matched with a current channel according to a certain optimal criterion, calculates a CQI under the condition that the RI and the PMI are used, and finally reports the CSI to a base station. A conventional method for selecting the PMI is traversing all PMIs under a current RI, and selecting an optimal PMI according to a certain optimal criterion (for example, a maximum channel capacity or a minimum mean square error). It can be concluded that in the conventional method for selecting the PMI, the calculation complexity depends on the number of codebooks under a current layer number.

The codebook for the 5G system is based on a two-dimensional Discrete Fourier Transform (DFT) beam with appropriate spatial sampling, which also dramatically increases the number of codebooks configured by the system. At present, in a scenario of configuration for a Single Panel (SP) antenna array 5G (SP 5G) system, the configured codebook adopts a basic structure of first PMI+second PMI, in which the first PMI represents a wideband precoding matrix index, and the second PMI represents a subband precoding index. For the codebook of layer 1 and layers 5~8, the first PMI adopts a structure of first PMI1+first PMI2, which respectively represent beam precoding directions in a horizontal direction and a vertical direction. Under this configuration, the maximum number of CSI-RS ports that can be configured by the SP 5G system is 32, the maximum space sampling multiple in the horizontal and vertical directions is 4, and in such a case, the number of codebooks at each layer can reach 2048 at most. It is foreseeable that a future 5G system may need to support more CSI-RS ports and a precoding codebook with a higher resolution at the same time, so that the number of system codebooks will be further increased. It can be seen based on the above description that if a traverse search algorithm continues to be used for each layer, the calculation complexity of the feedback of the UE will be very large.

U.S. Patent application publication No. US2014016549 A1 discloses methods and apparatus for codebook subset restriction for two-dimensional advanced antenna systems. A user equipment (UE) in a wireless network having two-dimensional antenna systems performs a method of codebook sampling. The method includes receiving from an eNodeB (eNB) an indication of a restricted subset M of vertical precoding matrices, wherein M is less than a total number of vertical precoding matrices N in a codebook, the codebook comprising a plurality of vertical precoding matrices and horizontal precoding matrices. The method also includes feeding back vertical precoding matrix indicators (V-PMI) to the eNB based on the restricted subset of vertical precoding matrices.

## Summary

The present disclosure provides a codebook information processing method, a terminal, and a computer-readable storage medium, which can reduce the computational complexity of acquiring codebook information.

The features of the codebook information processing method, the terminal, and the computer-readable storage medium according to the present invention are defined in the independent claim, and the preferable features according to the present invention are defined in the dependent claims.

Some embodiments of the present disclosure provide a codebook information processing method, including the following operations.

First value information corresponding to a first PMI (first Precoding Matrix Index, which is wideband precoding matrix index) when a coarse search is performed is acquired.

Codebook information to be used is determined according to the first value information and a preset PMI selection rule.

Some embodiments of the present disclosure provide a terminal, including a memory and a processor. The memory stores a computer program. The computer program is configured to implement, when being read and executed by a processor, the described codebook information processing method.

Some embodiments of the present disclosure provide a computer-readable storage medium. The computer-readable storage medium stores one or at least two computer programs, wherein the one or at least two computer programs, when being executed by one or at least two processors, implement any one of the described codebook information processing method.

The embodiments provided in the present disclosure can effectively reduce the number of times of calculation of PMI feedback of a terminal on the premise of achieving traversal search performance, and reduce the calculation complexity of the acquisition of codebook information.

## Brief Description of the Drawings

The accompanying drawings are used for providing an understanding of the technical solutions of the embodiments of the present disclosure, and constitute a part of the description. The drawings are used for explaining the technical solutions of the present disclosure together with the embodiments of the present disclosure, but do not constitute a limitation to the technical solutions of the present disclosure.

Fig. 1 is a flowchart of a codebook information processing method according to some embodiments of the present disclosure;
Fig. 2 is a flowchart of a method for codebook selection in a 5G system according to some embodiments of the present disclosure; and
Fig. 3 is a schematic structural diagram of a terminal according to some embodiments of the present disclosure.

## Detailed Description

Embodiments of the present disclosure will be described below in detail with reference to the drawings. It should be noted that, in the case of no conflict, the embodiments in the present disclosure and the features in the embodiments may be combined arbitrarily with each other.

Operations shown in the flowchart of the figures may be performed in a computer system such as a set of computer executable instructions. Furthermore, although a logic sequence is shown in the flowchart, in some cases, the shown or described operations may be executed in a sequence different from that described here.

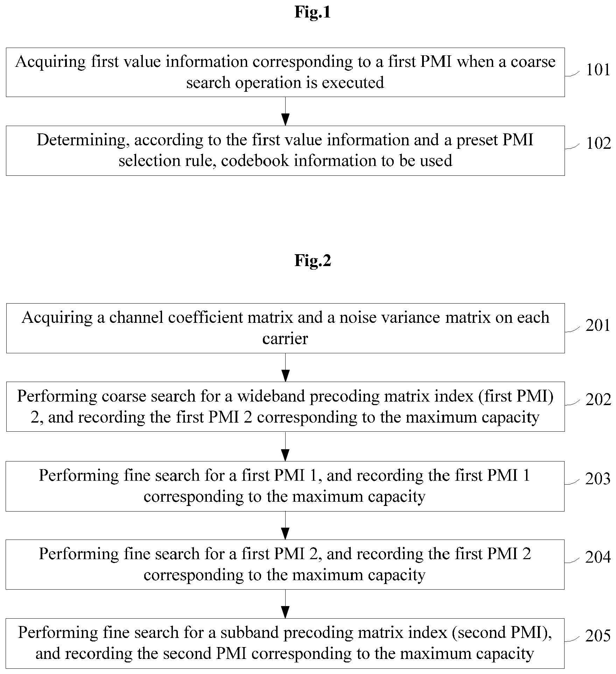

Fig. 1 is a flowchart of a codebook information processing method according to some embodiments of the present disclosure. The method shown in Fig. 1 includes operations 101 and 102.

At operation 101, first value information corresponding to a first PMI when a coarse search is performed is acquired.

The operation that the first value information corresponding to the first PMI when the coarse search is performed is acquired includes operations described as follows.

An initial values $i11_{rand}$ of a first PMI1, an initial value $i12_{rand}$ of a first PMI2 and an initial value $i2_{rand}$ of a second PMI are acquired randomly, wherein the first PMI1 and the first PMI2 are horizontal and vertical PMIs, respectively.

Numi12 sets of PMI parameters are acquired according to the acquired initial values $i11_{rand}$, $i12_{rand}$ and $i2_{rand}$, wherein the $a^{th}$ set of PMI parameters are $\{(i11_{rand}+a-1)mod(Numi11), (i12_{rand}+a-1)mod(Numi12), i2_{rand}\}$, where Numi11 and Numi12 are both positive integers respectively representing a total number of available first PMI1 and a total number of available first PMI2, and a is an integer less than or equal to Numi12.

Value information $i12_{save}$ of the first PMI2 complying with the PMI selection rule is selected according to the PMI selection rule from the Numi12 sets of PMI parameters as the first PMI2 acquired by performing the coarse search.

Here, the wideband precoding matrix index is the first PMI, and the subband precoding matrix index is the second PMI.

At operation 102, codebook information to be used is determined according to the first value information and a preset PMI selection rule.

In some exemplary embodiments, the operation that the codebook information to be used is determined according to the first value information and the preset PMI selection rule includes operations as follows.

Second value information corresponding to the first PMI when a fine search is performed is determined according to the first value information and the PMI selection rule.

Third value information corresponding to a second PMI when the fine search is performed is determined according to a second value range of the first PMI and the PMI selection rule.

According to the method embodiments provided in the present disclosure, first value information corresponding to a first PMI when a coarse search is performed is acquired, then codebook information to be used is determined according to the first value information and a preset PMI selection rule. In this process, a coarse search is first performed to determine an approximate range of the first PMI, and then a fine search is performed to determine the exact values of the first PMI and the second PMI. On the premise of achieving traversal search performance, the number of times of calculation of PMI feedback of a terminal can be effectively reduced, thereby reducing the calculation complexity of the acquisition of codebook information.

The method provided by the embodiments of the present disclosure is further described below.

In some exemplary embodiments, the operation that the second value information corresponding to the first PMI when the fine search is performed is determined according to the first value information and the PMI selection rule includes operations as follows.

Value information corresponding to a first PMI1 when the fine search is performed is determined according to the first value information and the PMI selection rule.

Value information corresponding to a first PMI2 when the fine search is performed is determined according to value information of the first PMI1 and the PMI selection rule.

In some exemplary embodiments, value information of the first PMI1 under a fine search can be acquired through calculation according to the value of the first PMI2 acquired by performing the coarse search, and then value information of the first PMI2 under a fine search can be acquired according to the value information of the first PMI1 under the fine search, thereby ensuring the accuracy of the value of the first PMI2 and improving the overall accuracy of the first PMI.

In some exemplary embodiments, the operation that the value information corresponding to the first PMI1 when the fine search is performed is determined according to the first value information and the PMI selection rule may include operations as follows.

Numi11 sets of PMI parameters are determined according to value information $i12_{save}$ of the first PMI2 acquired by performing the coarse search and an initial value $i2_{rand}$ of the second PMI, wherein the $b^{th}$ set of PMI parameters are $\{b-1, i12_{save}, i2_{rand}\}$, where b=1,2,3,... ..., Numi11, and Numi11 is a positive integer representing a total number available first PMI1.

Value information $i11_{report}$ of the first PMI1 complying with the PMI selection rule is selected according to the PMI selection rule from the Numi11 sets of PMI parameters as the first PMI1 corresponding to the fine search.

In some exemplary embodiments, the operation that the value information corresponding to the first PMI2 when the fine search is performed is determined according to the value information of the first PMI1 and the PMI selection rule may include operations as follows.

After acquiring value information $i11_{report}$ of the first PMI1 corresponding to the fine search, Numi12 sets of PMI parameters are determined according to the value information $i11_{report}$ of the first PMI1 acquired by performing the fine search and an initial value $i2_{rand}$ of the second PMI, wherein the $c^{th}$ set of PMI parameters are $\{i11_{report}, c-1, i2_{rand}\}$, where N is a positive integer less than or equal to Numi12;
Value information $i12_{report}$ of the first PMI1 complying with the PMI selection rule is selected according to the PMI selection rule from the Numi12 sets of PMI parameters as the first PMI2 corresponding to the fine search.

In some exemplary embodiments, the operation that the third value information corresponding to the second PMI when the fine search is performed is determined according to the second value range of the first PMI and the PMI selection rule includes operations as follows.

Numi2 sets of PMI parameters are determined according to value information $i11_{report}$ of the first PMI1 acquired by the fine search and value information $i12_{report}$ of the first PMI2 acquired by the fine search, wherein the $d^{th}$ set of PMI parameters is $\{i1_{report}, i12_{report}, d-1\}$, where d is a positive integer less than or equal to Numi2.

Value information $i2_{report}$ of the second PMI complying with the PMI selection rule is selected according to the PMI selection rule from the Numi2 sets of PMI parameters as the second PMI corresponding to the fine search.

In some exemplary embodiments, in the process of determining the value information of the PMI, a coarse search is first performed to determine an approximate range of the first PMI2, and then a further fine search is performed to determine accurate values of the first PMI and the second PMI, so that the number of times of calculation of the PMI feedback of the terminal can be effectively reduced.

In the described exemplary embodiments, the PMI selection rule may be calculating a channel capacity according to at least two acquired sets of PMI parameters, and selecting a PMI parameter according to the channel capacity, for example, a PMI parameter used when the channel capacity is the maximum may be set as a target parameter finally used.

In addition, in some exemplary embodiments, a fine search is respectively performed for the first PMI1, the first PMI2 and the second PMI, so as to realize three-layer search for the PMI, thereby reducing the search complexity on the premise that the search performance is consistent with the traversal search performance.

In an exemplary case, the numbers of antenna groups in a horizontal direction and a vertical direction are respectively N1 and N2, a spatial sampling multiple is 4, a second PMI is configured to be a Ni2 codebook configuration, and a random first PMI1 value and a random second PMI value are used in a coarse search. If the method of traversing all possible first PMI2 values is adopted, N2*4 searches are required. If the method in which a three-level separated search manner for the first PMI1, the first PMI2 and the second PMI is adopted for fine search, a total of N1*4+N2*4+Ni2 searches is needed for respectively traversing the possible first PMI1, first PMI2 and second PMI. It can be concluded that the number of searches needed is reduced from N1*N2*4*4*Ni2 to N1*4+2*N2*4+Ni2, so that an optimal PMI value can be acquired by fewer searches.

In some exemplary embodiments, after determining the codebook information to be used according to the first value information and the preset PMI selection rule, the method may further include the following operation.

The codebook information is sent to a base station.

In some exemplary embodiments, after the values of the PMI are acquired, the codebook information is sent to the base station, so as to provide a data basis for subsequent transmission.

The method provided by the embodiments of the present disclosure will be described below.

With regard to the problem of complexity of PMI search under a large-scale antenna array, the related art provides some solutions regarding a method of separate selection for a horizontal codebook and a vertical codebook from codebooks designed based on a discrete Fourier transform principle under a large-scale antenna array. The method can reduce complexity of codebook selection to some extent, but cannot be effectively applied to the current codebook structure of a 5G system.

The technical solution provided in the embodiments of the present disclosure overcomes the problem and defect existing in the related art that the complexity of PMI selection calculation and implementation in a Single Panel 5G system is relatively high, and provides a method for reducing the complexity of codebook selection for the current codebook structure of a 5G system.

Fig. 2 is a flowchart of a method for codebook selection in a 5G system according to some embodiments of the present disclosure. The method shown in Fig. 2 includes operations as follows.

At operation 201, a channel coefficient matrix $H_k$ and a noise variance matrix $\sigma_k^2 I_4$ on each subcarrier are estimated based on a pilot frequency signal CSI-RS.

At operation 202, according to a currently configured RI value, a codebook mode and antenna configuration, initial values of first PMI1, first PMI2 and second PMI are randomly generated. A first PMI set used for a coarse search is generated according to the initial values and a search step length, a channel capacity corresponding to PMI parameters composed of each first PMI in the first PMI set and the initial value of the second PMI is respectively calculated, and the value of the first PMI2 corresponding to the maximum capacity is selected and recorded.

At operation 203, according to the currently configured RI value, the codebook mode and the antenna configuration, a first PMI1 set used for search is generated, a channel capacity corresponding to PMI parameters composed of each first PMI1 in the first PMI1 set, the first PMI2 selected in operation 202 under a coarse search and the initial value of the second PMI is respectively calculated, and the value of the first PMI1 corresponding to the maximum capacity is selected and recorded.

At operation 204, according to the currently configured RI value, the codebook mode and the antenna configuration, a first PMI2 fine search control program 405 generates a first PMI2 set used for search. A channel capacity corresponding to PMI parameters composed of each first PMI in the first PMI2 set, the first PMI1 selected in operation 203 and an initial value of the second PMI is respectively calculated, and the value of the first PMI2 corresponding to the maximum capacity is selected and recorded.

At operation 205, according to the currently configured RI value, the codebook mode and the antenna configuration, a second PMI fine search control program 406 generates a second PMI set used for search. A capacity calculation and comparison program 402 respectively calculates a channel capacity corresponding to PMI parameters composed of each second PMI in the second PMI set, the first PMI selected in operation 203 and the first PMI selected in operation 204, and selects and records the value of the second PMI corresponding to the maximum capacity.

In the described operations, an approximate range of the first PMI2 is determined first by using a coarse search, and then the accurate values of the first PMI and the second PMI are determined by further fine search, so that the number of times of calculation for the PMI feedback of the terminal can be effectively reduced on the premise that the search performance is ensured to be basically consistent with the traversal search. In an exemplary case, the numbers of antenna groups in a horizontal direction and a vertical direction are respectively N1 and N2, a spatial sampling multiple is 4, a second PMI is configured to be a Ni2 codebook configuration, and a random first PMI1 value and a random second PMI value are used in a coarse search. If the method of traversing all possible first PMI2 values is adopted, N2*4 searches are required. If the method in which a three-level separated search manner for the first PMI1, the first PMI2 and the second PMI is adopted for fine search, a total of N1*4+N2*4+Ni2 searches is needed for respectively traversing the possible first PMI1, first PMI2 and second PMI. It can be concluded that the number of searches needed is reduced from N1*N2*4*4*Ni2 to N1*4+2*N2*4+Ni2, so that an optimal PMI value can be acquired by fewer searches.

The method provided in the embodiments of the present disclosure adopts a method of firstly performing a coarse search for a first PMI2 and then performing a fine search, thereby avoiding performance loss caused by poor initial PMIs used in the fine search. In addition, for a fine search, a three-level separated search manner of first PMI1, first PMI2 and second PMI is adopted, thereby effectively reducing the number of PMI searches, improving the processing speed of a terminal (e.g., UE), and reducing hardware implementation difficulty.

The method provided by the embodiments of the present disclosure will be illustrated below with an application example provided by the present disclosure.

In this application example, an SP 5G system, in which the numbers of antenna groups are N1=4 and N2=4, oversampling parameters are O1=4 and O2=4, RI=1, and a codebook mode 1 with 32 transmitting antenna ports and 8 receiving antenna ports is adopted, is taken as an example for description. The implementation operations are described as follows.

At operation 301, a channel coefficient matrix $H_k$ and a noise variance matrix $\sigma_k^2 I_8$ on the $k^{th}$ subcarrier are estimated by means of the CSI-RS, wherein

$$H_k = \begin{bmatrix} h_{0,0} & h_{0,1} & L & h_{0,31} \\ h_{1,0} & h_{1,1} & L & h_{1,31} \\ M & M & L & M \\ h_{7,0} & h_{7,1} & L & h_{7,31} \end{bmatrix}$$

$$\sigma_k^2 I_8 = \begin{bmatrix} \sigma_{0,0}^2 & 0 & ... & 0 \\ 0 & \sigma_{1,1}^2 & ... & 0 \\ ... & ... & ... & ... \\ 0 & 0 & ... & \sigma_{7,7}^2 \end{bmatrix}$$

In the channel coefficient matrix, $h_{i,j}$ is a channel coefficient from the $j^{th}$ transmitting antenna port to the $i^{th}$ receiving antenna, and $\sigma_{i,i}$ is noise power on the $i^{th}$ receiving antenna.

At operation 302, PMI parameters required for the capacity calculation by the coarse search for the first PMI2 are acquired, then a corresponding channel capacity is calculated according to the channel and noise coefficient acquired in operation 301 and the PMI parameters, and the PMI parameter corresponding to the maximum capacity is selected through comparison, so as to acquire a coarse search result of the first PMI2. The specific operations for the current process are described as follows.

Initial values corresponding to first PMI1 *i11*, first PMI2 *i12* and second PMI2 *i2* are generated according to the current RI, antenna configuration and codebook configuration. The specific generating method is described as follows. When the current numbers of antenna groups are **N1=4, N2=4**, over-sampling parameters are **O1=4, O2=4, RI=1**, and codebook mode 1, according to the relevant protocol of SP codebook in chapter 5.2.2.2.1 of 3GPP (3rd Generation Partnership Project) 38.214 V15.0.0, the available number of *i11* is **Numi11=N1\*O1=16**, and the value range of *i11* is [0, **Numi11-1**], the available number of *i12* is **Numi12=N2\*O2=16**, and the value range of *i12* is [0, **Numi12-1**], the available number of *i2* is **Numi2=4**, and the value range of *i2* is [0, 3]. A value is randomly selected from the value ranges of the three parameters as search initial values of the three PMI parameters, which are respectively recorded as $i11_{rand}$, $i12_{rand}$, $i2_{rand}$.

According to the generated initial values of the PMI parameters, the PMI parameters used in each capacity calculation based on the coarse search for the first PMI2 are as follows,

Initial values {$i11_{rand}$, $i12_{rand}$, $i2_{rand}$} of three parameters are used for the first calculation (the PMI parameters are arranged in the order of {first PMI1 *i11*, first PMI2 *i12*, second PMI *i2}*, which is the same hereinafter).

The PMI parameters used for the Nth calculation are {$(i11_{Trand}$+N-1)mod(Numi11), $(i12ran$+N-1)mod(Numi12), $i2_{rand}$}.

The rest may be deduced by analogy, and the PMI parameters used for the last calculation, i.e., the **Numi12$^{th}$** calculation, are {($i11_{rand}$+Num12-1)mod(Numi11), ($i12_{rand}$+Numi12-1)mod(Numi12), $i2_{rand}$}.

After acquiring **Numi12** sets of PMI parameters, a corresponding precoding matrix $W_N$ is generated according to a preset configuration parameter and Nth input PMI parameter, and then a channel capacity sum $Cap_N$ corresponding to all subcarriers is calculated according to the precoding matrix $W_N$ in combination with the channel coefficient matrix $H_k$ and the noise variance matrix $\sigma_k^2 I_8$. The precoding matrix may refer to the relevant protocol of the SP codebook in Chapter 5.2.2.1 of 3GPP 38.214 V15.0. The capacity calculation process is as follows:

$$Cap_N = \sum_k \log_2 \left| \frac{W_N^H H_k^H H_k W_N}{\frac{1}{N_{Rx}} \sum_i \sigma_{i,i}^2} + I_{RI \times RI} \right|$$

$N_{Rx}$ represents the number of receiving antennas, $I_{RI \times RI}$ represents a unit matrix with a size of RI * RI, and H represents conjugate transposition.

After the channel capacity is acquired, the maximum value of all of the **Numi12** calculated channel capacities is selected, and the value of the first PMI2 used during the calculation of the maximum capacity is recorded, which is marked as $i12_{save}$.

At operation 303, after acquiring the value of the first PMI2 by the coarse search, PMI parameters required for each capacity calculation by the fine search for the first PMI1 are acquired, then a corresponding channel capacity is calculated according to the channel and noise coefficient acquired in operation 301 and the PMI parameters, and the PMI parameter corresponding to the maximum capacity is selected through comparison. The specific operations for the current process are described as follows.

Initial values of first PMI1 *i11*, first PMI2 *i12* and second PMI *i2* corresponding to this operation are generated according to the current RI, antenna configuration, codebook configuration and the PMI parameters output by the capacity calculation and comparison program 402, wherein the initial value of *i11* is 0, the initial value of *i12* is $i12_{save}$, and the initial value of *i2* is $i2_{rand}$.

According to the generated initial values of the PMI parameters, the PMI parameters used in each capacity calculation based on the fine search for the first PMI1 are as follows.

Initial values {0, $i12_{save}$, $i2_{rand}$} of three parameters are used for the first calculation.

The PMI parameters used for the Nth calculation are $\{N-1, i12_{save}, i2_{rand}\}$.

The rest may be deduced by analogy, and the PMI parameters used for the last calculation, i.e., the **Numi11$^{th}$** calculation, are $\{Numi11\text{-}1, i12_{save}, i2_{rand}\}$.

After acquiring **Numi11-1** sets of PMI parameters, a corresponding precoding matrix $W_N$ is generated according to a preset configuration parameter and Nth input PMI parameters, and then a channel capacity sum $Cap_N$ corresponding to all subcarriers is calculated according to the precoding matrix $W_N$ in combination with the channel coefficient matrix $H_k$ and the noise variance matrix $\sigma_k^2 I_8$. The capacity calculation process is the same as operation 302.

After the channel capacity is acquired, the maximum value of all the **Numi11** calculated channel capacities is selected, and the first PMI1 parameter used in the calculation of the maximum capacity is recorded, which is marked as $i11_{report}$.

At operation 304, after acquiring the value of the first PMI1 under the fine search, PMI parameters required for each capacity calculation by the fine search for the first PMI2 are acquired, then a corresponding channel capacity is calculated according to the channel and noise coefficient acquired in operation 301 and the PMI parameters, and the PMI parameter corresponding to the maximum capacity is selected through comparison. The specific operations for the current process are described as follows.

Initial values of first PMI1 *i11*, first PMI2 *i12* and second PMI *i2* corresponding to this operation are generated according to the current RI, antenna configuration, codebook configuration and PMI parameters output by the capacity calculation and comparison program 402, wherein the initial value of *i11* is $i11_{report}$, the initial value of *i12* is *0,* and the initial value of *i2* is $i2_{rand}$.

According to the generated initial values of the PMI parameters, the PMI parameters used in each capacity calculation based on the fine search for the first PMI2 are as follows.

Initial values $\{i11_{report}, 0, i2_{rand}\}$ of the three parameters are used for the first calculation.

The PMI parameters used for the Nth calculation are $\{i11_{report}, N\text{-}1, i2_{rand}\}$.

The rest may be deduced by analogy, and the PMI parameters used for the last calculation, i.e., the **Numi12$^{th}$** calculation, are $\{i11_{report}, Numi12\text{-}1, i2_{rand}\}$.

After **Numi12** sets of PMI parameters are acquired, a corresponding precoding matrix $W_N$ is generated according to a preset configuration parameter and the Nth input PMI parameter, and then a channel capacity sum $Cap_N$ corresponding to all subcarriers are calculated according to the precoding matrix $W_N$ in combination with the channel coefficient matrix $H_k$ and the noise variance matrix $\sigma_k^2 I_8$. The capacity calculation process is the same as operation 302.

After the channel capacity is acquired, the maximum value of all of the **Numi12** calculated channel capacities is selected, and the first PMI2 parameter used during the calculation of the maximum capacity is recorded, which is marked as $i12_{report}$.

At operation 305: after the values of the first PMI1 under the fine search and the first PMI2 under the fine search are acquired, PMI parameters required for each capacity calculation by the fine search for the second PMI are acquired, then a corresponding channel capacity is calculated according to the channel and noise coefficient acquired in operation 301 and the PMI parameters, and the PMI parameter corresponding to the selected maximum capacity is selected as the finally selected PMI. The specific operations for the current process are described as follows.

The initial values of first PMI1 *i11*, first PMI2 *i12* and second PMI *i2* corresponding to this operation are generated according to the current RI, antenna configuration, codebook configuration and the PMI parameters output by the capacity calculation and comparison program 402, wherein the initial value of *i11* is $i11_{report}$, the initial value of *i12* is $i12_{report}$, and the initial value of *i2* is *0*.

According to the generated initial values of the PMI parameters, the PMI parameters used in each capacity calculation based on the fine search for the second PMI are as follows.

Initial values $\{i11_{report}, i12_{report}, 0\}$ of the three parameters are used for the first calculation.

The PMI parameters used for the Nth calculation are $\{i11_{report}, i12_{report}, N\text{-}1\}$.

The rest may be deduced by analogy, and the PMI parameters used for the last calculation, i.e., the **Numi2$^{th}$** calculation, are $\{i11_{report}, i12_{report}, Numi2\text{-}1\}$.

After **Numi2** sets of PMI parameters are acquired, a corresponding precoding matrix $W_N$ is generated according to a preset configuration parameter and the Nth input PMI parameter, and then a channel capacity sum $Cap_N$ corresponding to all subcarriers are calculated according to the precoding matrix $W_N$ in combination with the channel coefficient matrix $H_k$ and the noise variance matrix $\sigma_k^2 I_8$. The capacity calculation process is the same as operation 302.

After the channel capacity is acquired, the maximum value of all of the **Numi2** calculated channel capacities is selected, and the second PMI parameter, denoted as $i2_{report}$, used during the calculation of the maximum capacity is recorded. Till this operation, all the search processes are completed, and the finally selected PMI to be reported is the three parameters $\{i11_{report}, i12_{report}, i2_{report}\}$.

From the above operations, it can be seen that when carrying out the search for the PMI codebook by using the method provided by the embodiments of the present disclosure, four searches are required to complete a three-level separated search for one layer, and the number of searches needed is equal to **Numi12\*2+Numi11+Numi2=16\*2+16+4=52.** Compared with the conventional traversing method, 1024 searches are required, and the searching complexity of one layer in the related art is equal to **Numi11\*Numi12+Numi2= 16\*16+4=260** to the lowest. The complexity of the method of the embodiments of the present disclosure is only 5% of that of a one-level search of a traversing method and 1/4 of that of a related similar technique. In the method of the embodiments of the present disclosure, a relatively good **i12** parameter is selected by performing a coarse search in sequence, thereby avoiding a search performance loss caused by an excessively poor initial parameter during a fine search on the premise that the search performance is consistent with that of the traversing method. In addition, with respect to a 5~8 layer codebook adopting a structure similar to that of one layer SP codebook, under the configuration of this embodiment, the method of the embodiments of the present disclosure can also reduce the searching time to less than 10% of the time required by the traversing algorithm, and at the same time ensure the consistency of the performance with the traversing algorithm.

Compared with the method in which **i11** coarse search is first performed, then **i12** fine search is performed, and finally **i11** and **i2** fine search are performed, the described method of the present disclosure has less or equal complexity during the coarse search. This is because, according to the antenna configuration rule of the 5G protocol, **N1** is greater than or equal to **N2,** the number of the coarse searches in the method of the embodiments of the present disclosure is **4\*N2,** and the number of the coarse searches in the comparison method is **4\*N1;** therefore, in configurations other than **N1=N2,** the method of the embodiments of the present disclosure has smaller coarse search complexity. Since the fine search complexity for both methods are **Numi12+Numi11+Numi2,** the method of the embodiments of the present disclosure has more advantages in terms of the total number of searches.

The embodiments of the present disclosure provide a terminal, including a memory and a processor. The memory stores a computer program, and the computer program is configured to implement, when being read and executed by a processor, the codebook information processing method.

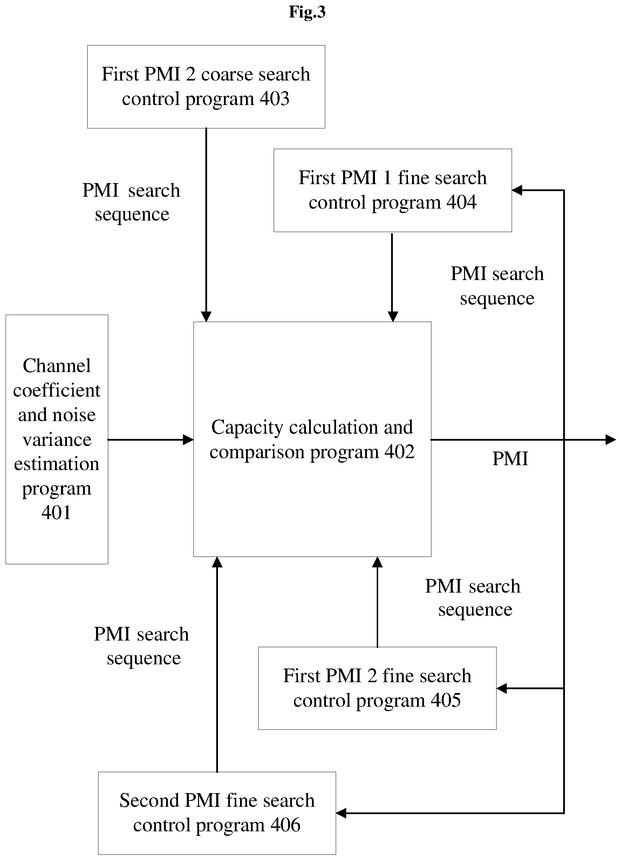

Fig. 3 is a schematic structural diagram of a terminal according to some embodiments of the present disclosure. In the structure diagram shown in Fig. 3, the memory stores computer programs 401 to 406 which are described in detail below.

A channel coefficient and noise variance estimation program 401 is configured to estimate a channel coefficient matrix $H_k$ and a noise variance matrix $\sigma_k^2 I_4$ on each subcarrier according to a reference signal, and input the channel coefficient and the noise into a capacity calculation and comparison program 402 for capacity calculation.

The capacity calculation and comparison program 402 is configured to generate a corresponding codebook according to a configured RI, a codebook mode, an antenna configuration and parameters (containing a first PMI1, a first PMI2 and a second PMI) output by a search control program, calculate a corresponding channel capacity based on the channel coefficient matrix and the noise variance matrix provided by the channel coefficient and noise variance estimation program 401, compare and select a codebook with larger capacity and store the corresponding first PMI1, first PMI2 and second PMI, and output these PMI parameters to programs 404, 405, and 406.

A first PMI2 coarse search control program 403 is configured to sequentially output, according to a preset coarse search rule for the first PMI2, PMI parameters (including a first PMI1, a first PMI2 and a second PMI) to the capacity calculation and comparison program 402 based on input parameters (RI, a codebook mode and an antenna configuration).

A first PMI1 fine search control program 404 is configured to sequentially output, according to a preset fine search rule for the first PMI1, PMI parameters (including a first PMI1, a first PMI2 and a second PMI) to the a capacity calculation and comparison program 402 based on input parameters (RI, a codebook mode and an antenna configuration) and a preliminary first PMI2 acquired by the coarse search for the first PMI2 and provided by the capacity calculation and comparison program 402.

A first PMI2 fine search control program 405 is configured to sequentially output, according to a preset fine search rule for the first PMI2, PMI parameters (including a first PMI1, a first PMI2 and a second PMI) to the capacity calculation and comparison program 402 based on input parameters (RI, a codebook mode and an antenna configuration) and an optimal first PMI1 acquired by the fine search for first PMI1 and provided by the capacity calculation and comparison program 402.

A second PMI fine search control program 406 is configured to sequentially output, according to a preset fine search rule for the second PMI, PMI parameters (containing a first PMI1, a first PMI2 and a second PMI) to the capacity calculation and comparison program 402 based on input parameters (RI, a codebook mode and an antenna configuration) and an optimal first PMI1 acquired by the fine search for the first PMI1 and an optimal first PMI2 acquired by the fine search for the first PMI2, which are provided by the capacity calculation and comparison program 402.

According to the terminal embodiments provided by the present disclosure, first value information corresponding to a first PMI when a coarse search is performed is acquired, then codebook information to be used is determined according to the first value information and a preset PMI selection rule, an approximate range of a first PMI is determined by using a coarse search, and then further fine search is performed to determine the exact value of the first PMI and the second PMI. On the premise of achieving the traversal search performance, the number of times of calculation of PMI feedback of a terminal can be effectively reduced, thereby reducing the calculation complexity of the acquisition of codebook information.

The embodiments of the present disclosure provide a computer-readable storage medium. The computer-readable storage medium stores one or at least two computer programs, wherein the one or at least two computer programs are executed by one or at least two processors, so as to realize the described codebook information processing method.

By virtue of the computer-readable storage medium provided in the embodiments of the present disclosure, first value information corresponding to a first PMI when a coarse search is performed is acquired, then codebook information to be used is determined according to the first value information and a preset PMI selection rule, an approximate range of a first PMI is determined by using a coarse search, and then further fine search is performed to determine the exact value of the first PMI and the second PMI. On the premise of achieving the traversal search performance, the number of times of calculation of PMI feedback of a terminal can be effectively reduced, thereby reducing the calculation complexity of the acquisition of codebook information.

Those having ordinary skill in the art can appreciate that all or some of the operations of the methods disclosed above and the functional blocks/units in the systems and apparatuses may be implemented as software, firmware, hardware, and any suitable combination thereof. In a hardware implementation, the division between functional modules/units referred to in the above description does not necessarily correspond to the division of physical components. For example, one physical component may have multiple functions, or one function or operation may be cooperatively performed by several physical components. Some or all components may be implemented as software executed by a processor, such as a digital signal processor or microprocessor; or may be implemented as hardware, or as an integrated circuit, such as an application specific integrated circuit. Such software may be distributed on computer-readable media, which may include computer storage media (or non-transitory media) and communication media (or transitory media). As is well known to those having ordinary skill in the art, the term computer storage medium includes volatile and non-volatile, removable and non-removable media implemented in any method or technique for storing information (such as computer-readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, as is known to those having ordinary skill in the art, communication media typically include computer-readable instructions, data structures, program modules, or other data in a modulated data signal such as a carrier wave or other transport mechanism and may include any information delivery media.

## Claims

1. A codebook information processing method, comprising:

   acquiring (101) first value information corresponding to a wideband precoding matrix index, first PMI, when a coarse search is performed; and
   determining (102), according to the first value information and a preset precoding matrix index, PMI, selection rule, codebook information to be used,
   **characterized in that**, acquiring (101) the first value information corresponding to the first PMI when the coarse search is performed comprises:

   acquiring an initial value $i11_{rand}$ of a first PMI1, an initial value $i12_{rand}$ of a first PMI2, and an initial value $i2_{rand}$ of a subband precoding matrix index, second PMI, randomly according to a currently configured Rank Indicator, RI, value, a codebook mode and antenna configuration, wherein the first PMI1 and the first PMI2 are horizontal and vertical PMIs, respectively;
   acquiring Numi 12 sets of PMI parameters according to the acquired initial values $i11_{rand}$, $i12_{rand}$ and $i2_{rand}$, wherein the $a^{th}$ set of PMI parameters are $\{(i11_{rand}+a-1)mod(Numi11), (i12_{rand}+a-1)mod(Numi12), i2_{rand}\}$, where Numi11 and Numi12 are both positive integers respectively representing a total number of available first PMI1 and a total number of available first PMI2, and a is an integer less than or equal to Numi12; and
   selecting, according to the PMI selection rule, value information $i12_{save}$ of the first PMI2 complying with the PMI selection rule from the Numi12 sets of PMI parameters as the first PMI2 acquired by performing the coarse search.

2. The method according to claim 1, wherein determining (102), according to the first value information and the preset PMI selection rule, the codebook information to be used comprises:

> determining, according to the first value information and the PMI selection rule, second value information corresponding to the first PMI when a fine search is performed; and
> determining, according to a second value range of the first PMI and the PMI selection rule, third value information corresponding to the second PMI when the fine search is performed.

3. The method according to claim 2, wherein determining, according to the first value information and the PMI selection rule, the second value information corresponding to the first PMI when the fine search is performed comprises:

> determining, according to the first value information and the PMI selection rule, value information corresponding to the first PMI1 when the fine search is performed; and
> determining, according to the value information of the first PMI1 and the PMI selection rule, value information corresponding to the first PMI2 when the fine search is performed.

4. The method according to claim 3, wherein determining, according to the first value information and the PMI selection rule, the value information corresponding to the first PMI1 when the fine search is performed comprises:

> determining Numi11 sets of PMI parameters according to the value information $i12_{save}$ of the first PMI2 acquired by performing the coarse search and the initial value $i2_{rand}$ of the second PMI, wherein the $b^{th}$ set of PMI parameters are $\{b-1, i12_{save}, i2_{rand}\}$, where b=1,2,3,..., Numi11 and
> selecting, according to the PMI selection rule, value information $i11_{report}$ of the first PMI1 complying with the PMI selection rule from the Numi11 sets of PMI parameters as the first PMI1 corresponding to the fine search.

5. The method according to claim 3, wherein determining, according to the value information of the first PMI1 and the PMI selection rule, the value information corresponding to the first PMI2 when the fine search is performed comprises:

> after acquiring value information $i11_{report}$ of the first PMI1 corresponding to the fine search, determining Numi 12 sets of PMI parameters according to the value information $i11_{report}$ of the first PMI1 acquired by performing the fine search and the initial value $i2_{rand}$ of the second PMI,

> wherein the $c^{th}$ set of PMI parameters are $\{i11_{report}, c-1, i2_{rand}\}$, where c is a positive integer less than or equal to Numi12; and
> selecting, according to the PMI selection rule, value information $i12_{report}$ of the first PMI2 complying with the PMI selection rule from the Numi12 sets of PMI parameters as the first PMI2 corresponding to the fine search.

6. The method according to any one of claims 3 to 5, wherein determining, according to the second value range of the first PMI and the PMI selection rule, the third value information corresponding to the second PMI when the fine search is performed comprises:

> determining Numi2 sets of PMI parameters according to value information $i11_{report}$ of the first PMI1 acquired by the fine search and value information $i12_{report}$ of the first PMI2 acquired by the fine search, wherein the $d^{th}$ set of PMI parameters is $\{i11_{report}, i12_{report}, d-1\}$, where d is a positive integer less than or equal to Numi2; and
> selecting, according to the PMI selection rule, value information $i2_{report}$ of the second PMI complying with the PMI selection rule from the Numi2 sets of PMI parameters as the second PMI corresponding to the fine search.

7. The method according to claim 1, wherein after determining (102), according to the first value information and the preset PMI selection rule, the codebook information to be used, the method further comprises:
sending the codebook information to a base station.

8. The method according to claim 1, wherein before acquiring (101) the first value information corresponding to the first PMI when the coarse search is performed, the method further comprises:
estimating a channel coefficient matrix and a noise variance matrix on each subcarrier based on a pilot frequency signal, CSI-RS.

9. The method according to any one of claims 1 to 8, wherein the PMI selection rule comprises:

> calculating a channel capacity according to at least two sets of PMI parameters; and
> selecting a PMI parameters according to a channel capacity.

10. The method according to claim 9, wherein selecting the PMI parameter according to the channel capacity comprises:
selecting PMI parameter used when the channel capacity is the maximum.

**11.** A terminal, comprising a memory and a processor, wherein the memory stores a computer program, and the computer program is configured to implement, when being read and executed by a processor, the codebook information processing method according to any one of claims 1 to 10.

**12.** A computer-readable storage medium, wherein the computer-readable storage medium stores one or at least two computer programs, and the one or at least two computer programs, when being executed by one or at least two processors, implement the codebook information processing method according to any one of claims 1 to 10.

**Patentansprüche**

**1.** Ein Codebuch-Informationsverarbeitungsverfahren, umfassend:

Erfassen (101) einer ersten Wertinformation, die einem Breitband-Vorcodierungsmatrix-Index, erster PMI, entspricht, wenn eine Grobsuche durchgeführt wird; und
Bestimmen (102) der zu verwendenden Codebuchinformationen gemäß der ersten Wertinformation und einer voreingestellten Vorcodierungsmatrix-Index, PMI, Auswahlregel,
**dadurch gekennzeichnet, dass** das Erfassen (101) der ersten Wertinformation, die dem ersten PMI entspricht, wenn die Grobsuche durchgeführt wird, umfasst:

Erfassen eines Anfangswerts $i11_{rand}$ eines ersten PMI1, eines Anfangswerts $i12_{rand}$ eines ersten PMI2 und eines Anfangswerts $i2_{rand}$ eines Subband-Vorcodierungsmatrix-Index, zweiter PMI,
nach dem Zufallsprinzip entsprechend einem aktuell konfigurierten Wert für den Rangindikator (RI), einem Codebuchmodus und der Antennenkonfiguration,
wobei der erste PMI1 und der erste PMI2 horizontale bzw. vertikale PMI sind;
Erfassen von Numi12-Sätzen von PMI-Parametern entsprechend den erfassten Anfangswerten $i11_{rand}$, $i12_{rand}$ und $i2_{rand}$, wobei der $a^{th}$-Satz von PMI-Parametern $\{(i11_{rand}+a-1)mod(Numi11), (i12_{rand}+a-1)mod(Numi12), i2_{rand}\}$ ist, wobei Numi11 und Numi12 beide positive ganze Zahlen sind, die die Gesamtzahl der verfügbaren ersten PMI1 bzw. die Gesamtzahl der verfügbaren ersten PMI2 darstellen, und a eine ganze Zahl kleiner oder gleich Numi12 ist; und
Auswahl, gemäß der PMI-Auswahlregel,

der Wertinformation $i12_{save}$ des ersten PMI2, die der PMI-Auswahlregel entspricht, aus den Numi12-Sätzen von PMI-Parametern als dem ersten PMI2, der durch Ausführen der Grobsuche gewonnen wurde.

**2.** Verfahren nach Anspruch 1, wobei das Bestimmen (102) der zu verwendenden Codebuchinformation gemäß der ersten Wertinformation und der voreingestellten PMI-Auswahlregel umfasst:

Bestimmen, gemäß der ersten Wertinformation und der PMI-Auswahlregel, einer zweiten Wertinformation, die dem ersten PMI entspricht, wenn eine Feinsuche durchgeführt wird; und
Bestimmen, entsprechend einem zweiten Wertebereich des ersten PMI und der PMI-Auswahlregel, einer dritten Wertinformation, die dem zweiten PMI entspricht, wenn die Feinsuche durchgeführt wird.

**3.** Verfahren nach Anspruch 2, wobei das Bestimmen der zweiten Wertinformation, die dem ersten PMI entspricht, wenn die Feinsuche durchgeführt wird, gemäß der ersten Wertinformation und der PMI-Auswahlregel umfasst:

Bestimmen, gemäß der ersten Wertinformation und der PMI-Auswahlregel, einer Wertinformation, die dem ersten PMI1 entspricht, wenn die Feinsuche durchgeführt wird; und
Bestimmen, entsprechend der Wertinformation des ersten PMI1 und der PMI-Auswahlregel, der Wertinformation, die dem ersten PMI2 entspricht, wenn die Feinsuche durchgeführt wird.

**4.** Verfahren nach Anspruch 3, wobei das Bestimmen der Wertinformation, die dem ersten PMI1 entspricht, wenn die Feinsuche durchgeführt wird, gemäß der ersten Wertinformation und der PMI-Auswahlregel umfasst:

Bestimmen von Numi11-Sätzen von PMI-Parametern gemäß der Wertinformation $i12_{save}$ des ersten PMI2, die durch Ausführen der Grobsuche gewonnen wurde, und dem Anfangswert $i2_{rand}$ des zweiten PMI, wobei der $b^{th}$-Satz von PMI-Parametern $\{b-1, i12_{save}, i2_{rand}\}$ ist, wobei b=1,2,3,..., Numi11; und
Auswahl, gemäß der PMI-Auswahlregel, der Wertinformation $i11_{report}$ des ersten PMI1, die der PMI-Auswahlregel entspricht, aus den Numi11-Sätzen von PMI-Parametern als dem ersten PMI1, der der Feinsuche entspricht.

**5.** Verfahren nach Anspruch 3, wobei das Bestimmen der Wertinformation, die dem ersten PMI2 entspricht, wenn die Feinsuche durchgeführt wird, gemäß der Wertinformation des ersten PMI1 und der PMI-Auswahlregel umfasst:

nach dem Erfassen von Wertinformationen $i11_{report}$ des ersten PMI1, die der Feinsuche entsprechen, Bestimmen von Numi12 Sätzen von PMI-Parametern gemäß den Wertinformationen $i11_{report}$ des ersten PMI1, die durch Ausführen der Feinsuche erfasst wurden, und dem Anfangswert $i2_{rand}$ des zweiten PMI, wobei der $c^{th}$ Satz von PMI-Parametern $\{i11_{report}, c-1, i2_{rand}\}$ ist, wobei c eine positive ganze Zahl kleiner oder gleich Numi12 ist; und
Auswahl, gemäß der PMI-Auswahlregel, der Wertinformation $i12_{report}$ des ersten PMI2, die die PMI-Auswahlregel erfüllt, aus den Numi12-Sätzen von PMI-Parametern als dem ersten PMI2, der der Feinsuche entspricht.

6. Verfahren nach einem der Patentansprüche 3 bis 5, wobei das Bestimmen der dritten Wertinformation, die dem zweiten PMI entspricht, wenn die Feinsuche durchgeführt wird, gemäß dem zweiten Wertebereich des ersten PMI und der PMI-Auswahlregel umfasst:

Bestimmen von Numi2-Sätzen von PMI-Parametern gemäß der Wertinformation $i11_{report}$ des ersten PMI1, die durch die Feinsuche gewonnen wurden, und der Wertinformation $i12_{report}$ des ersten PMI2, die durch die Feinsuche gewonnen wurde, wobei der $d^{th}$-Satz von PMI-Parametern $\{i11_{report}, i12_{report}, d-1\}$ ist, wobei d eine positive ganze Zahl kleiner oder gleich Numi2 ist; und
Auswahl, gemäß der PMI-Auswahlregel, der Wertinformation $i2_{report}$ des zweiten PMI, die die PMI-Auswahlregel erfüllt, aus den Numi2-Sätzen von PMI-Parametern als dem zweiten PMI, die der Feinsuche entspricht.

7. Verfahren nach Anspruch 1, wobei das Verfahren nach dem Bestimmen (102) der zu verwendenden Codebuchinformationen gemäß der ersten Wertinformation und der voreingestellten PMI-Auswahlregel ferner umfasst:
Senden der Codebuchinformationen an eine Basisstation.

8. Verfahren nach Anspruch 1, wobei das Verfahren vor dem Erfassen (101) der ersten Wertinformation, die dem ersten PMI entspricht, wenn die Grobsuche durchgeführt wird, ferner umfasst:
Beurteilen einer Kanalkoeffizientenmatrix und einer Rauschvarianzmatrix auf jedem Unterträger auf der Grundlage eines Pilotfrequenzsignals, CSI-RS.

9. Verfahren nach einem der Patentansprüche 1 bis 8, wobei die PMI-Auswahlregel umfasst:

Berechnen einer Kanalkapazität gemäß mindestens zwei Sätzen von PMI-Parametern; und
Auswahl der PMI-Parameter in Abhängigkeit von der Kanalkapazität.

10. Verfahren nach Anspruch 9, wobei die Auswahl des PMI-Parameters entsprechend der Kanalkapazität umfasst:
Auswahl des PMI-Parameters, der verwendet wird, wenn die Kanalkapazität am höchsten ist.

11. Endgerät, das einen Speicher und einen Prozessor umfasst, wobei der Speicher ein Computerprogramm speichert und das Computerprogramm so konfiguriert ist, dass es, wenn es von einem Prozessor gelesen und ausgeführt wird, das Codebuchinformationsverarbeitungsverfahren nach einem der Patentansprüche 1 bis 10 implementiert.

12. Computerlesbares Speichermedium, wobei das computerlesbare Speichermedium ein oder mindestens zwei Computerprogramme speichert und das eine oder die mindestens zwei Computerprogramme, wenn sie von einem oder mindestens zwei Prozessoren ausgeführt werden, das Codebuchinformationsverarbeitungsverfahren nach einem der Patentansprüche 1 bis 10 implementieren.

**Revendications**

1. Procédé de traitement de l'information d'un livre de codes, comprenant :

acquérir (101) une première information de valeur correspondant à un indice de matrice de précodage à large bande, premier PMI, lorsqu'une recherche grossière est effectuée ; et déterminer (102), en fonction de la première information de valeur et d'un indice de matrice de précodage prédéfini, PMI, règle de sélection, l'information de livre de codes à utiliser, **caractérisé en ce que** acquérir (101) la première information de valeur correspondant au premier PMI lorsque la recherche grossière est effectuée comprend :

acquérir une valeur initiale $i11_{rand}$ d'un premier PMI1, d'une valeur initiale $i12_{rand}$ d'un premier PMI2, et d'une valeur initiale $i2_{rand}$ d'un indice de matrice de précodage de sous-bande, second PMI, de manière aléatoire en fonction d'une valeur d'indicateur de rang RI actuellement configurée, d'un mode de livre de codes et de la configuration de l'antenne, dans lequel le premier PMI1 et le premier PMI2 sont des PMI horizontaux et verticaux, respectivement ;

acquérir de Numi12 ensembles de paramètres PMI en fonction des valeurs initiales acquises $i11_{rand}$ , $i12_{rand}$ et $i2_{rand}$ , dans lesquels les $a^{th}$ ensembles de paramètres PMI sont $\{(i11_{rand} +a-1)\bmod(Numi11), (i12_{rand} +a-1)\bmod(Numi12), i2_{rand} \}$, où Numi 11 et Numi 12 sont tous les deux des nombres entiers positifs représentant respectivement un nombre total de premières PMI1 disponibles et un nombre total de premières PMI2 disponibles, et a est un nombre entier inférieur ou égal à Numi12 ; et

sélectionner, conformément à la règle de sélection des PMI, les informations sur la valeur $i12_{save}$ du premier PMI2 conforme à la règle de sélection des PMI parmi les Numi12 ensembles de paramètres PMI en tant que premier PMI2 acquis par l'exécution de la recherche grossière.

**2.** Procédé selon la revendication 1, dans lequel déterminer (102), en fonction de l'information de première valeur et de la règle de sélection PMI prédéfinie, l'information de livre de codes à utiliser comprend :

déterminer, en fonction de la première information de valeur et de la règle de sélection PMI, la deuxième information de valeur correspondant au premier PMI lorsqu'une recherche fine est effectuée ; et

déterminer, en fonction d'une deuxième plage de valeurs du premier PMI et de la règle de sélection des PMI, des informations sur la troisième valeur correspondant au deuxième PMI lorsque la recherche fine est effectuée.

**3.** Procédé selon la revendication 2, dans lequel déterminer, en fonction de l'information de première valeur et de la règle de sélection PMI, l'information de deuxième valeur correspondant au premier PMI lors de la recherche fine comprend :

déterminer, en fonction de la première information de valeur et de la règle de sélection PMI, l'information de valeur correspondant au premier PMI1 lorsque la recherche fine est effectuée ; et

déterminer, en fonction des informations sur la valeur du premier PMI1 et de la règle de sélection des PMI, les informations sur la valeur correspondant au premier PMI2 lorsque la recherche fine est effectuée.

**4.** Procédé selon la revendication 3, dans lequel déterminer, en fonction de la première information de valeur et de la règle de sélection PMI, l'information de valeur correspondant au premier PMI1 lors de la recherche fine comprend :

déterminer des ensembles Numi11 de paramètres PMI en fonction de l'information sur la valeur $i12_{save}$ du premier PMI2 obtenue en effectuant la recherche grossière et de la valeur initiale $i2_{rand}$ du second PMI, l'ensemble $b^{th}$ de paramètres PMI étant $\{b-1, i12_{save} , i2_{rand} \}$, où $b=1,2,3,..., Numi11$ ; et

sélectionner, conformément à la règle de sélection des PMI, l'information sur la valeur $_{i11report}$ du premier PMI1 conforme à la règle de sélection des PMI parmi les Numi11 ensembles de paramètres PMI en tant que premier PMI1 correspondant à la recherche fine.

**5.** Procédé selon la revendication 3, dans lequel déterminer, en fonction de l'information de valeur du premier PMI1 et de la règle de sélection des PMI, l'information de valeur correspondant au premier PMI2 lors de la recherche fine comprend :

après avoir acquis l'information de valeur $i 11_{report}$ du premier PMI1 correspondant à la recherche fine, déterminer Numi 12 ensembles de paramètres PMI en fonction de l'information de valeur $i11_{report}$ du premier PMI1 acquise en effectuant la recherche fine et la valeur initiale $i2_{rand}$ du second PMI, dans lequel l'ensemble $c^{th}$ de paramètres PMI est $\{i11_{report}, c-1, i2_{rand} \}$, où c est un nombre entier positif inférieur ou égal à Numi12 ; et

sélectionner, conformément à la règle de sélection des PMI, l'information sur la valeur $i12_{report}$ du premier PMI2 conforme à la règle de sélection des PMI parmi les Numi12 ensembles de paramètres PMI en tant que premier PMI2 correspondant à la recherche fine.

**6.** Procédé selon l'une quelconque des revendications 3 à 5, dans lequel déterminer, en fonction de la deuxième plage de valeurs du premier PMI et de la règle de sélection des PMI, la troisième information de valeur correspondant au deuxième PMI lors de la recherche fine comprend :

déterminer Numi2 ensembles de paramètres PMI en fonction des informations de valeur $i11_{report}$ du premier PMI1 acquises par la recherche fine et des informations de valeur $i12_{report}$ du premier PMI2 acquises par la recherche fine, l'ensemble $d^{th}$ de paramètres PMI étant $\{i11_{report}, i12_{report}, d-1\}$, où d est un nombre entier positif inférieur ou égal à Numi2 ; et

sélectionner, conformément à la règle de sélection des PMI, l'information sur la valeur $i2_{report}$ du deuxième PMI conforme à la règle de sélection des PMI parmi les ensembles Numi2 de paramètres PMI en tant que deuxième PMI correspondant à la recherche fine.

7. Procédé selon la revendication 1, dans lequel après avoir déterminé (102), en fonction de l'information de première valeur et de la règle de sélection PMI prédéfinie, l'information de livre de codes à utiliser, le procédé comprend en outre :
transmettre les informations relatives au livre de codes à une station de base.

8. Procédé selon la revendication 1, dans lequel avant d'acquérir (101) la première information de valeur correspondant au premier PMI lors de la recherche grossière, le procédé comprend en outre :
estimer une matrice de coefficient de canal et une matrice de variance de bruit sur chaque sous-porteuse sur la base d'un signal de fréquence pilote, CSI-RS.

9. Procédé selon l'une quelconque des revendications 1 à 8, dans lequel la règle de sélection PMI comprend :

calculer une capacité de canal en fonction d'au moins deux ensembles de paramètres PMI ; et sélectionner des paramètres PMI en fonction de la capacité du canal.

10. Procédé selon la revendication 9, dans lequel sélectionner le paramètre PMI en fonction de la capacité du canal comprend :
sélectionner le paramètre PMI utilisé lorsque la capacité du canal est maximale.

11. Terminal, comprenant une mémoire et un processeur, dans lequel la mémoire stocke un programme d'ordinateur, et le programme d'ordinateur est configuré pour mettre en oeuvre, lorsqu'il est lu et exécuté par un processeur, le procédé de traitement des informations du livre de codes selon l'une quelconque des revendications 1 à 10.

12. Support de stockage lisible par ordinateur, dans lequel le support de stockage lisible par ordinateur stocke un ou au moins deux programmes d'ordinateur, et le ou les deux programmes d'ordinateur, lorsqu'ils sont exécutés par un ou au moins deux processeurs, mettent en oeuvre le procédé de traitement d'informations de livre de codes selon l'une quelconque des revendications 1 à 10.

**Fig.1**

| Acquiring first value information corresponding to a first PMI when a coarse search operation is executed | — 101 |
|---|---|

↓

| Determining, according to the first value information and a preset PMI selection rule, codebook information to be used | — 102 |
|---|---|

**Fig.2**

| Acquiring a channel coefficient matrix and a noise variance matrix on each carrier | — 201 |
|---|---|

↓

| Performing coarse search for a wideband precoding matrix index (first PMI) 2, and recording the first PMI 2 corresponding to the maximum capacity | — 202 |
|---|---|

↓

| Performing fine search for a first PMI 1, and recording the first PMI 1 corresponding to the maximum capacity | — 203 |
|---|---|

↓

| Performing fine search for a first PMI 2, and recording the first PMI 2 corresponding to the maximum capacity | — 204 |
|---|---|

↓

| Performing fine search for a subband precoding matrix index (second PMI), and recording the second PMI corresponding to the maximum capacity | — 205 |
|---|---|

Fig.3

First PMI 2 coarse search control program 403

PMI search sequence

First PMI 1 fine search control program 404

PMI search sequence

Channel coefficient and noise variance estimation program 401

Capacity calculation and comparison program 402

PMI

PMI search sequence

PMI search sequence

First PMI 2 fine search control program 405

PMI search sequence

Second PMI fine search control program 406

**REFERENCES CITED IN THE DESCRIPTION**

**Patent documents cited in the description**

- US 2014016549 A1